# EUROPEAN PATENT SPECIFICATION

(11) **EP 1 435 189 B1**
(45) Date of publication and mention of the grant of the patent: **11.02.2009**
(21) Application number: 01976649.2
(22) Date of filing: 12.10.2001
(51) Int. Cl.: H04W 4/00

(54) **SYSTEM FOR PROVIDING INFORMATION ABOUT THE LOCATION OF MOBILE USERS SUBSCRIBING TO A NETWORK AND ROAMING IN A DIFFERENT NETWORK NOT SUPPORTING THE SAME POSITIONING METHOD**
SYSTEM ZUM BEREITSTELLEN VON INFORMATION ZUM STANDORT DES MOBILEN NUTZERS, DER NETZDIENSTE BEANSPRUCHT UND IN EIN ANDERES NETZ GEWECHSELT IST, IN DEM NICHT DAS GLEICHE POSITIONIERUNGSVERFAHREN BEREITGESTELLT WIRD
SYSTEME DE FOURNITURE D'INFORMATIONS PERMETTANT DE LOCALISER DES UTILISATEURS DU TELEPHONE CELLULAIRE ABONNES A UN RESEAU ET EN ITINERANCE DANS UN RESEAU DIFFERENT N'UTILISANT PAS LE MEME PROTOCOLE DE LOCALISATION

(43) Date of publication of application: 07.07.2004
(73) Proprietor: TELEFONAKTIEBOLAGET LM ERICSSON (publ), 164 83 Stockholm (SE)
(72) Inventor: DE LUCA, Enrico, 81100 Caserta (IT); PAPADIMITRIOU, Dimitris, 15153 Pallini (GR)
(74) Representative: Pfeifer, Torsten
(86) International application number: PCT/IT2001/000520
(87) International publication number: WO 2003/039187

(56) References cited:
- WO-A-97/24010
- US-A- 6 040 800
- US-A- 6 138 003
- US-A1- 2001 003 093

## Description

The present invention relates to a new system which is able to provide location information about mobile users subscribing to the positioning feature with their operator and roaming in the network of a different or the same operator not supporting the same LoCation Services (LCS) positioning feature.

The invention can be applied to both GSM and UMTS technologies, and in the context of both Circuit Switch (CS) and Packet Switch (PS).

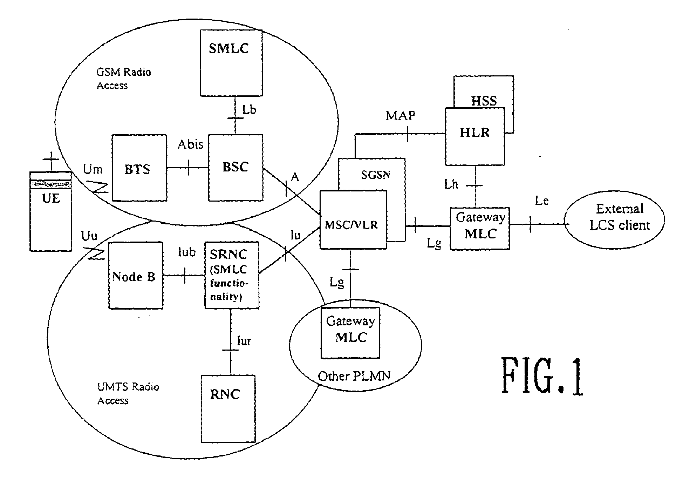

The standard architecture of the mobile positioning system is the one represented in fig. 1 of the appended drawings.

The Gateway Mobile Location Center (GMLC) implements functionalities required to support the Location Services LCS. In one network, there may be more than one GMLC. Each GMLC is the first node for the accesses of an external LoCation Services Client (LCS Client) in a mobile network. The GMLC may request routing information from a global register - Home Location Register (HLR) or Home Subscriber Server (HSS) - of the subscribers of the operator. Furthermore the GMLC contains information allowing to perform authentication and authorization activities of external LCS Client entities requiring location of mobile users. After having obtained the routing information and performed the authorization and authentication activities of the external LCS Clients, the GMLC sends the location request to the Mobile Switching Center/Visitor Location Register (MSC/VLR) or Serving GPRS Support Node (SGSN) and receives information about the geographic coordinates of the mobile user terminal whose location has been requested from the corresponding entities.

The HLR/HSS register contains all subscription user data, including the LCS subscription user data, and routing information. For a roaming mobile subscriber, the HRL/HSS may be in a network different from the one he is currently roaming into. In other words, should the user be roaming in the network of an operator different from the one he subscribes to, the HLR/HSS register is always the one of the operator the user subscribes to. The MSC/VLR or SGSN implements the functional activities for authorizing and handling location requests relating to the subscriber.

The system provides the opportunity of requesting the location of the mobile user terminals from an external LCS Client (Mobile Terminating Location Request = MT-LR), the location from the terminal itself (Mobile Originating Location Request = MO-LR) and the auto-induced location from network (Network Induced-Location Request=NI-LR). WO 97/24010 discloses a method for personal location services, wherein a cell ID is converted into geographical coordinates to use in a reply to a location request.

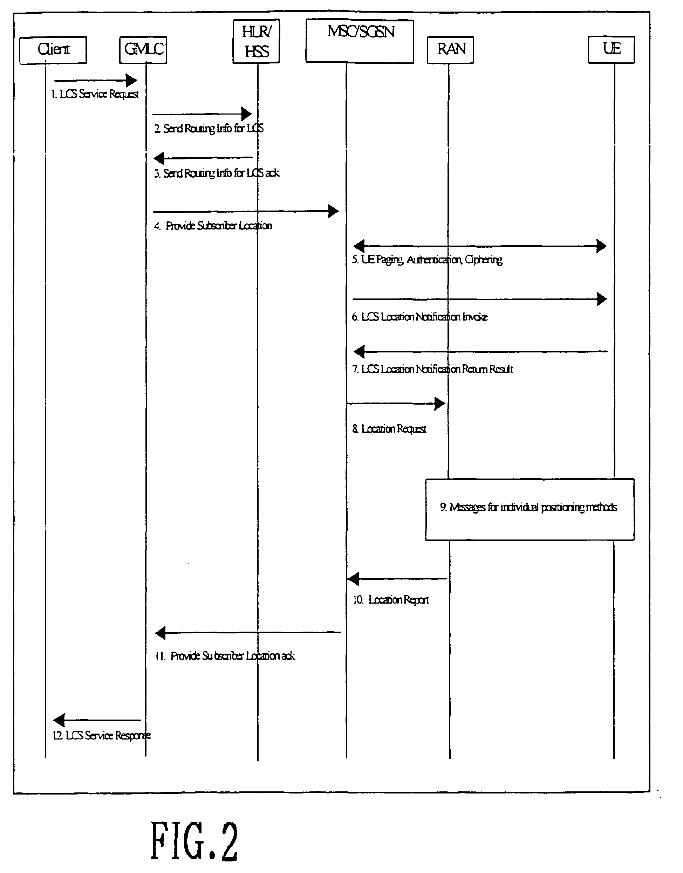

In fig. 2 of the appended drawings a diagram of the main signalling between nodes is shown, in case of terminating positioning request.

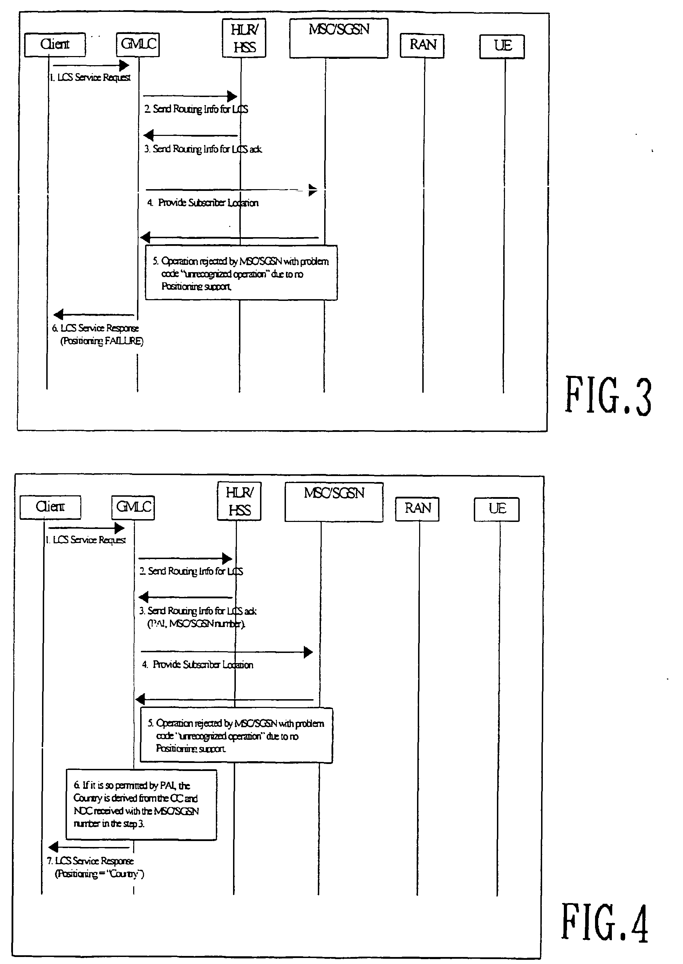

According to the state of the art, when a mobile user, subscribing to an operator, is roaming in a network different from the one he is currently roaming into (in the same or in a different geographical area), which network does not support the same LCS positioning feature as in subscriben network, a terminating location request from an external LCS Client is not possible for this subscriber. In this case, the signalling flow will take place according to fig. 3 of the appended drawings and the operation will end with a failure.

The object of the present invention is to overcome, at least to a certain substantial extent, the above described serious problem.

To achieve that, the invention foresees that the home network LCS Client is provided with information relating to the geographical area in which the subscriber is located.

More precisely, the invention relates to a system for providing location information for mobile users subscribing to a network of an operator and roaming in a different network of a different or the same operator not supporting the same LCS positioning feature as in the subscriber network, characterized in that any kind of node and/or application accessing through a gateway the subscriber network is provided with subscriber's location information based on the address - in Terms of denomination of the geographical area pertaining to said different network - of the mobile switching center MSC or Visitor Location Register VLR or Serving GPRS Support Node SGNS.

The system foresees the introduction in the subscriber's operator network of a new subscriber privacy check regarding said information to be transferred externally to the network.

Preferably, the invention provides a method comprising the steps of:
- inserting in the HLR/HSS, in the Subscriber LCS Privacy Profile (SLPP), a new information through which the subscriber grants or refuses the authorization to provide a third party with its location, in terms of denomination of the geographical area, in case of roaming in a different network not supporting the same LCS positioning features as in the subscriber network;
- transferring this information on the signalling interface between the HLR/HSS and the GMLC;
- and adding in the GMLC a further subscriber LCS privacy check based on the new information received, according to which the geographical information is provided or not externally to the network,
- the external LCS Client being arranged to receive the geographical information with an accuracy different from that required by it.

The invention will be better understood by referring to the appended drawings, in which:
fig. 1 is a block diagram representing the standard architecture of the mobile positioning system LCS according to the state of the art, already referred to;
figs 2 and 3 respectively show how, according to the state of the art, the main signalling takes place between nodes in case of a successful terminating location request and how, instead, said signalling does not aiiow to comply with the same request when a mobile user is roaming in a different network not supporting the same LCS positioning feature as in the subscriber network, both figures being already referred to in the above text; and
fig. 4 represents how, according to the invention, the main signalling flow between nodes of the system allows to obtain location information, in terms of denomination of the geographical area, also regarding a mobile user roaming in networks different from the one to which it subscribes and not supporting the same LCS positioning feature as in the subscriber network.

As already mentioned, according to the invention, any kind of node or application accessing through a gateway the subscriber network - node or application that can be defined as LCS Client external to the subscriber's network - is provided with location information of the subscriber itself based on the address of the mobile switching center MSC/VLR or SGSN, when the subscriber is roaming in a different network not supporting the same LCS positioning feature as in the subscriber network. Said address is provided in terms of denomination of the geographical area pertaining to said different operator.

In order to implement the invention, a new information is inserted in the HLR/HSS in the Subscriber LCS Privacy Profile (SLPP) and through this new information the subscriber itself grants or refuses the authorization to provide a third party with its location in terms of denomination of the geographical area, in case of roaming in a different network not supporting the same LCS positioning feature as in the subscriber network. According to the invention, this information is transferred on the signalling interface Lₕ (fig. 1) between the Home Location Register (HLR) or the Home Subscriber Server (HSS) and the Gateway Mobile Location Center (GMLC).

Suitably, in the GMLC a further subscriber LCS privacy check is added, based on the new information received, according to which the geographical information is provided or not externally to the network.

Of course, for an efficient operation of the system according to the invention, the external LCS Client must be arranged to receive the geographical information with an accuracy different from that required by it.

The main signalling flow between the nodes of the system according to the invention, in order to obtain location information in terms of geographical area, is represented in fig. 4 of the appended drawings.

When receiving the request from the external LCS Client, the GMLC asks the HLR/HSS a routing information, which is returned by the same HLR/HSS to the GMLC along with the new information regarding how to handle the location request, when the subscriber is roaming in a different network not supporting the same LCS positioning feature as in the subscriber net work. This takes place through the SEND_ROUTING_INFO_ _FOR_ LCS MAP message response.

In all cases where the MAP operation "PROVIDE_SUBSCRIBER_ _LOCATION is rejected by the MSC/SGSN with the problem code "unrecognized operation", the GMLC checks if the new subscriber LCS privacy information, previously received by the Home Location Register (HLR) or the Home Subscriber Server (HSS), according to the invention, allows the operator to use the location information in terms of denomination of the geographical area regarding the mobile user. If it is allowed, the Country Code (CC) and the Network Destination Code (NDC) from MSC/VLR or SGSN address received in response to the MAP message "PROVIDE_SUBSCRIBER_LOCATION" are translated into a text string corresponding to the relevant geographical area (e.g. Country) and sent to the external LCS Client. The external LCS Client will then be able to supply geographical information on the location of the mobile user of interest.

The invention also applies to the case in which the mobile user is roaming in a node of the subscriber network not supporting the same LCS positioning feature of the entity (GMLC) requesting the positioning information. In other words the system according to the invention concerns also the case in which the subscriber's home network and the different network in which the mobile user is roaming are different nodes of the same network.

The advantages attainable with the invention are apparent. First, said system makes the subscriber able to let suitably selected third parties to get informed about the geographical area where he is, even if he is roaming in a network not supporting the same LCS positioning feature of the network he subscribes to. Moreover, the service provider has the possibility to sell a new service (a positioning service different from the usual ones, relating to the geographical area), thus increasing its revenues.

The invention is provided for GSM or UMTS or GPRS network.

The invention comprises also a computer program loadable on a memory, adapted to perform the steps of the method described above.

## Claims

1. A Gateway Mobile Location Center (GMLC) comprising
• means for receiving a request for information about the location of a mobile user terminal from an external LoCation Services client - subsequently abbreviated as LCS - client, said mobiie user terminal being subscribed to a network supporting an LCS positioning feature and roaming in another network not supporting the LCS positioning feature,
• means for requesting routing information from a global register (HLR, HSS) of the network said mobile user terminal is subscribed to,
• means for receiving the requested routing information being associated with the network said mobile user terminal is roaming in from said global register (HLR, HSS),
• means for sending a request for information on location of the mobile user terminal according to the received routing information to a Mobile Switching Center (MSC) or a Visitor Location Register (VLR) or a Serving GPRS Support Node (SGSN),
**characterized by**
• means for receiving a rejection information from said Mobile Switching Center (MSC) or said Visitor Location Register (VLR) or said Serving GPRS Support Node (SGSN), indicating that the network is not supporting the LCS positioning feature in response to the request for information on location of the mobile user terminal, and
• means for determining based on said received routing information the relevant geographical area regarding the location of the mobile user terminal, and
• means for providing said relevant geographical area to the external LCS Client,
• said routing information received from said global register (HLR, HSS) includes a further information whether the subscriber grants authorization to provide a third party with the location of the mobile user terminal in case of roaming in another network not supporting the LCS positioning feature; and
• wherein the relevant geographical area is provided to the external LCS client only if said further information indicates that the subscriber grants authorization to provide a third party with the location of the mobile user terminal in case of roaming in another network not supporting the LCS positioning feature.

2. The Gateway Mobile Location Center (GMLC) according to claim 1, further comprising means for authenticating and authorizing said external LCS Client.

3. The Gateway Mobile Location Center (GMLC) according to one of claims 1 or 2, wherein the means for providing the relevant geographical area are arranged to translate the Country Code (CC) and the Network Destination Code (NDC) of said routing information into a text string.

4. The Gateway Mobile Location Center (GMLC) according to one of claims 1 to 3, wherein the Gateway Mobile Location Center (GMLC) is a GSM or a UMTS network node.

5. A global register (HLR, HSS) of a network a mobile user terminal is subscribed to, said mobile user terminal being subscribed to a network supporting an LoCation Services - subsequently abbreviated as LCS - positioning feature and roaming in another network not supporting the LCS positioning feature, comprising
• means for receiving a request for routing information from a Gateway Mobile Location Center (GMLC),
• means for sending the requested routing information being associated with the network said mobile user terminal is roaming in to said Gateway Mobile Location Center (GMLC),
• said routing information sent to said Gateway Mobile Location Center (GMLC) includes a further information whether said subscriber grants authorization to provide a third party with the location of the mobile terminal in case of roaming in another network not supporting the LCS positioning feature, allowing said Gateway Mobile Location Center (GMLC) thereby to determine based on said routing information the relevant geographical area regarding the location of the mobile user terminal.

6. The global register (HLR, HSS) according to claim 5, comprising means adapted for providing the subscriber access to said further information for activation or deactivation.

7. The global register (HLR, HSS) according to claim 5 or 6, wherein the global register (HLR, HSS) is a GSM or a UMTS network node.

8. A method for a Gateway Mobile Location Center (GMLC) comprising the steps of:
• receiving (1) a request for information about the location of a mobile user terminal from an external LoCation Services - subsequently abbreviated as LCS - client, said mobile user terminal being subscribed to a network supporting an LCS positioning feature and roaming in another network not supporting the LCS positioning feature,
• requesting (2) routing information from a global register (HLR, HSS) of the network said mobile user terminal is subscribed to,
• receiving (3) the requested routing information being associated with the network said mobile user terminal is roaming in from said global register (HLR, HSS),
• sending (4) a request for information on location of the mobile user terminal according to the received routing information to a Mobile Switching Center (MSC) or a Visitor Location Register (VLR) or a Serving GPRS Support Node (SGSN),
**characterized by**
• receiving (5) a rejection information from said Mobile Switching Center (MSC) or said Visitor Location Register (VLR) or said Serving GPRS Support Node (SGSN), indicating that the network is not supporting the LCS positioning feature in response to the request for information on location of the mobile user terminal, and
• determining (6) based on said received routing information the relevant geographical area regarding the location of the mobile user terminal, and
• providing (7) said relevant geographical area to the external LCS Client,
• said routing information received from said global register (HLR, HSS) includes a further information whether the subscriber grants authorization to provide a third party with the location of the mobile user terminal in case of roaming in another network not supporting the LCS positioning feature; and
• wherein the relevant geographical area is provided to the external LCS client only if said further information indicates that the subscriber grants authorization to provide a third party with the location of the mobile user terminal in case of roaming in another network not supporting the LCS positioning feature.

9. The method for a Gateway Mobile Location Center (GMLC) according to claim 8, further comprising the step of authenticating and authorizing said external LCS Client.

10. The method for a Gateway Mobile Location Center (GMLC) according to one of claims 8 or 9, wherein providing relevant geographical area further comprises translating the Country Code (CC) and the Network Destination Code (NDC) of said routing information into a text string.

11. The method for a Gateway Mobile Location Center (GMLC) according to one of claims 8 to 10, wherein the method is used in a GSM or a UMTS network.

12. A method for a global register (HLR, HSS) of a network a mobile user terminal is subscribed to, said mobile user terminal being subscribed to a network supporting an LoCation Services - subsequently abbreviated as LCS - positioning feature and roaming in another network not supporting the LCS positioning feature, comprising the steps of
• receiving (2) a request for routing information from a Gateway Mobile Location Center (GMLC)
• sending (3) the requested routing information being associated with the network said mobile user terminal is roaming in to said Gateway Mobile Location Center (GMLC).,
• said routing information sent to said Gateway Mobile Location Center (GMLC) including a further information whether said subscriber grants authorization to provide a third party with the location of the mobile terminal in case of roaming in another network not supporting the LCS positioning feature, allowing said Gateway Mobile Location Center (GMLC) thereby to determine (6) based on said routing information the relevant geographical area regarding the location of the mobile user terminal.

13. The method for a global register (HLR, HSS) according to claim 12, further comprising the step of providing a subscriber access to said further information for activation or deactivation.

14. The method for a global register (HLR, HSS) according to claim 12 or 13, wherein the method is used in a GSM or a UMTS network.

15. Computer program loadable on a memory adapted to perform the steps of one of the methods according to claims 8 to 14.

## Patentansprüche

1. Gateway-Mobillokalisierungseinrichtung (GMLC), aufweisend:
- Mittel zum Empfangen einer Abfrage von Information über den Aufenthaltsort eines mobilen Benutzerendgeräts von einem externen LoCation Services-Client - im Folgenden als LCS-Client abgekürzt, wobei das mobile Benutzerendgerät an ein Netz angemeldet ist, das ein LCS-Positionierungsmerkmal unterstützt und in ein anderes Netz gewechselt ist, welches das LCS-Positionierungsmerkmal nicht unterstützt,
- Mittel zum Abfragen von Routinginformation von einem globalen Register (HLR, HSS) des Netzes, an welchem das mobile Benutzerendgerät angemeldet ist,
- Mittel zum Empfangen der abgefragten Routinginformation, die mit dem Netz assoziiert ist, in welches das mobile Benutzerendgerät wechselt, vom globalen Register (HLR, HSS),
- Mittel zum Senden einer Abfrage von Information über den Aufenthaltsort des mobilen Benutzerendgeräts gemäß der empfangenen Routinginformation an eine Mobilvermittlungseinrichtung (MSC) oder ein Besucherregister (VLR) oder einen versorgenden GPRS-Unterstützungsknoten (SGSN), **gekennzeichnet durch**
- Mittel zum Empfangen einer Zurückweisungsinformation von der Mobilvermittlungseinrichtung (MSC) oder dem Besucherregister (VLR) oder dem versorgenden GPRS-Unterstützungsknoten (SGSN) aqnzeigend, dass das Netz das LCS-Positionierungsmerkmal nicht unterstützt, als Antwort auf die Abfrage von Information über den Aufenthaltsort des mobilen Benutzerendgeräts, und
- Mittel zum Bestimmen des relevanten geografischen Gebiets in Bezug auf den Aufenthaltsort des mobilen Benutzerendgeräts auf der Basis der empfangenen Routinginformation, und
- Mittel zum Liefern des relevanten geografischen Gebiets an den externen LCS-Client,
- wobei die Routinginformation, die vom gloablen Register (HLR, HSS) empfangen wird, eine weitere Information umfasst, ob der Teilnehmer die Genehmigung erteilt, den Aufenthaltsort des mobilen Benutzerendgeräts im Falle des Wechselns in ein anderes Netz, welches das LCS-Positionierungsmerkmal nicht unterstützt, an einen Dritten zu liefern; und
- wobei das relevante geografische Gebiet nur dann an den externen LCS-Client geliefert wird, wenn die weitere Information angibt, dass der Teilnehmer die Genehmigung erteilt, den Aufenthaltsort des mobilen Benutzerendgeräts im Falle des Wechselns in ein anderes Netz, welches das LCS-Positionierungsmerkmal nicht unterstützt, an einen Dritten zu liefern.

2. Gateway-Mobillokalisierungseinrichtung (GMLC) nach Anspruch 1, ferner aufweisend Mittel zum Authentifizieren und Autorisieren des externen LCS-Clients.

3. Gateway-Mobillokalisierungseinrichtung (GMLC) nach Anspruch 1 oder 2, wobei die Mittel zum Liefern des relevanten geografischen Gebiets so ausgelegt sind, dass sie den Landescode (CC) und den Netzzielcode (NDC) der Routinginformation in eine Textfolge übersetzen.

4. Gateway-Mobillokalisierungseinrichtung (GMLC) nach einem der Ansprüche 1 bis 3, wobei die Gateway-Mobillokalisierungseinrichtung (GMLC) ein GSM- oder ein UMTS-Netzknoten ist.

5. Globales Register (HLR, HSS) eines Netzes, an das ein mobiles Benutzerendgerät angemeldet ist, wobei das mobile Benutzerendgerät an ein Netz engemeldet ist, das ein LoCation Services - im Folgenden als LCS abgekürzt - Positionierungsmerkmal unterstützt und in ein anderes Netz gewechselt ist, welches das LCS-Positionierungsmerkmal nicht unterstützt, aufweisend:
- Mittel zum Empfangen einer Abfrage von Routinginformation von einer Gateway-Mobillokalisierungseinrichtung (GMLC),
- Mittel zum Senden der abgefragten Routinginformation, die mit dem Netz assoziiert ist, in welches das mobile Benutzerendgerät wechselt, an die Gateway-Mobillokalisierungseinrichtung (GMLC),
- wobei die Routinginformation , die an die Gateway-Mobillokalisierungseinrichtung (GMLC) gesendet wird, eine weitere Information umfasst, ob der Teilnehmer die Genehmigung erteilt, den Aufenthaltsort des mobilen Endgeräts im Falle des Wechselns in ein anderes Netz, welches das LCS-Positionierungsmerkmal nicht unterstützt, an einen Dritten zu liefern, und es der Gateway-Mobillokalisierungseinrichtung (GMLC) **dadurch** ermöglicht, auf der Basis der Routinginformation das relevante geografische Gebiet in Bezug auf den Aufenthaltsort des mobilen Benutzerendgeräts zu bestimmen.

6. Globales Register (HLR, HSS) nach Anspruch 5, aufweisend Mittel, die so ausgelegt sind, dass sie dem Teilnehmer Zugriff auf die weitere Information zur Aktivierung oder Deaktivierung gewähren.

7. Globales Register (HLR, HSS) nach Anspruch 5 oder 6, wobei das weltweite Register (HLR, HSS) ein GSM- oder ein UMTS-Netzknoten ist.

8. Verfahren für eine Gateway-Mobillokalisierungseinrichtung (GMLC), aufweisend die folgenden Schritte:
- Empfangen (1) einer Abfrage von Information über den Aufenthaltsort eines mobilen Benutzerendgeräts von einem externen LoCation Services - im Folgenden als LCS abgekürzt - Client, wobei das mobile Benutzerendgerät an ein Netz angemeldet ist, das ein LCS-Positionierungsmerkmal unterstützt und in ein anderes Netz gewechslet ist, welches das LCS-Positionierungsmerkmal nicht unterstützt,
- Abfragen (2) von Routinginformation von einem gloablen Register (HLR, HSS) des Netzes, an welches das mobile Benutzerendgerät angemeldet ist,
- Empfangen (3) der abgefragten Routinginformation, die mit dem Netz assoziiert ist, in welches das mobile Benutzerendgerät wechselt, vom gloablen Register (HLR, HSS),
- Senden (4) einer Abfrage von Information über den Aufenthaltsort des mobilen Benutzerendgeräts gemäß der empfangenen Routinginformation an eine Mobilvermittlungseinrichtung (MSC) oder ein Besucherregister (VLR) oder einen versorgenden GPRS-Unterstützungsknoten (SGSN), **gekennzeichnet durch**
- Empfangen (5) einer Zurückweisungsinformation von der Mobilvermittlungseinrichtung (MSC) oder dem Besucherregister (VLR) oder dem versorgenden GPRS-Unterstützungsknoten (SGSN) mit der Angabe, dass das Netz das LCS-Positionierungsmerkmal nicht unterstützt, als Antwort auf die Abfrage von Information über den Aufenthaltsort des mobilen Benutzerendgeräts, und
- Bestimmen (6) auf der Basis der empfangenen Routinginformation des relevanten geografischen Gebiets in Bezug auf den Aufenthaltsort des mobilen Benutzerendgeräts, und
- Liefern (7) des relevanten geografischen Gebiets an den externen LCS-Client,
- wobei die Routinginformation, die vom gloablen Register (HLR, HSS) empfangen wird, eine weitere Information umfasst, ob der Teilnehmer die Genehmigung erteilt, den Aufenthaltsort des mobilen Benutzerendgeräts im Falle des Wechselns in ein anderes Netz, welches das LCS-Positionierungsmerkmal nicht unterstützt, an einen Dritten zu liefern; und
- wobei das relevante geografische Gebiet nur dann an den externen LCS-Client geliefert wird, wenn die weitere Information angibt, dass der Teilnehmer die Genehmigung erteilt, den Aufenthaltsort des mobilen Benutzerendgeräts im Falle des Wechselns in ein anderes Netz, welches das LCS-Positionierungsmerkmal nicht unterstützt, an einen Dritten zu liefern.

9. Verfahren für eine Gateway-Mobillokalisierungseinrichtung (GMLC) nach Anspruch 8, ferner aufweisend den Schritt des Authentifizierens und Autorisierens des externen LCS-Clients.

10. Verfahren für eine Gateway-Mobillokalisierungseinrichtung (GMLC) nach einem der Ansprüche 8 oder 9, wobei das Liefern des relevanten geografischen Gebiets ferner ein Übersetzen des Landescodes (CC) und des Netzzielcodes (NDC) der Routinginformation en in eine Textfolge umfasst.

11. Verfahren für eine Gateway-Mobillokalisierungseinrichtung (GMLC) nach einem der Ansprüche 8 bis 10, wobei das Verfahren in einem GSM- oder einem UMTS-Netz verwendet wird.

12. Verfahren für ein Globales Register (HLR, HSS) eines Netzes, an das ein mobiles Benutzerendgerät angemeldet ist, wobei das mobile Benutzerendgerät an ein Netz angemeldet ist, das ein LoCation Services - im Folgenden als LCS abgekürzt - Positionierungsmerkmal unterstützt und in ein anderes Netz gewechselt ist, welches das LCS-Positionierungsmerkmal nicht unterstützt, aufweisend die folgenden Schritte:
- Empfangen (2) einer Abfrage von Routinginformation von einer Gateway-Mobillokalisierungseinrichtung (GMLC),
- Senden (3) der abgefragten Leitwehinformation, die mit dem Netz assoziiert ist, in welchem das mobile Benutzerendgerät wandert, an die Gateway-Mobillokalisierungseinrichtung (GMLS),
- wobei die Routinginformation , die an die Gateway-Mobillokalisierungseinrichtung (GMLC) gesendet wird, eine weitere Information umfasst, ob der Teilnehmer die Genehmigung erteilt, den Aufenthaltsort des mobilen Endgeräts im Falle des Wechselns in einem anderen Netz, welches das LCS-Positionierungsmerkmal nicht unterstützt, an einen Dritten zu liefern, und es der Gateway-Mobillokalisierungseinrichtung (GMLC) **dadurch** ermöglicht, auf der Basis der Routinginformation das relevante geografische Gebiet in Bezug auf den Aufenthaltsort des mobilen Benutzerendgeräts zu bestimmen.

13. Verfahren für ein Globales Register (HL, HSS) nach Anspruch 12, ferner aufweisend den Schritt, einem Teilnehmer Zugriff auf die weitere Information zur Aktivierung oder Deaktivierung zu gewähren.

14. Verfahren für ein Globales Register (HLR, HSS) nach Anspruch 12 oder 13, wobei das Verfahren in einem GSM- oder einem UMTS-Netzknoten verwendet wird.

15. Computerprogramm, das in einen Speicher geladen werden kann und so ausgelegt ist, dass es die Schritte eines der Verfahren nach Anspruch 8 bis 14 ausführt.

## Revendications

1. Centre de localisation mobile de passerelle (GMLC) comprenant
• Des moyens pour recevoir une demande d'information concernant la localisation d'un terminal d'utilisateur mobile provenant d'un client de services de localisation externe - désigné par la suite en abrégé comme client LCS, ledit terminal d'utilisateur mobile étant abonné à un réseau supportant une fonctionnalité de positionnement LCS et se déplaçant dans un autre réseau ne supportant pas la fonctionnalité de positionnement LCS,
• Des moyens pour demander une information de routage à un registre global (HLR,HSS) du réseau auquel ledit terminal d'utilisateur mobile est abonné,
• Des moyens pour recevoir l'information de routage demandée étant associée au réseau dans lequel ledit terminal d'utilisateur mobile se déplace en provenance dudit registre global (HLR,HSS),
• Des moyens pour envoyer une demande d'information concernant la position du terminal d'utilisateur mobile selon l'information de routage reçue à un centre de commutation pour les services mobiles (MSC) ou un registre de localisation visiteur (VLR) ou un noeud de support GPRS de desserte (SGSN),
**caractérisé par**
• Des moyens pour recevoir une information de rejet provenant dudit centre de commutation pour les services mobiles (MSC) ou dudit registre de localisation visiteur (VLR) ou dudit noeud de support GPRS de desserte (SGSN) indiquant que le réseau ne supporte pas la fonctionnalité de positionnement LCS en réponse à la demande d'information concernant la localisation du terminal d'utilisateur mobile, et
• Des moyens pour déterminer sur la base de ladite information de routage reçue la zone géographique pertinente en ce qui concerne la localisation du terminal d'utilisateur mobile, et
• Des moyens pour fournir ladite zone géographique pertinente au client LCS externe,
• Ladite information de routage reçue en provenance dudit registre global (HLR,HSS) incluant une information supplémentaire de ce que l'abonné accorde l'autorisation de fournir à une tierce partie la localisation du terminal d'utilisateur mobile en cas de déplacement dans un autre réseau ne supportant pas la fonctionnalité de positionnement LCS ;
• Et dans lequel la zone géographique pertinente est fournie au client LCS externe seulement si ladite information indique que l'abonné accorde l'autorisation de fournir à une tierce partie la localisation du terminal d'utilisateur mobile en casde déplacement dans un autre réseau ne supportant pas la fonctionnalité de positionnement LCS.

2. Centre de localisation mobile de passerelle (GMLC) selon la revendication 1, comprenant en outre des moyens pour authentifier et autoriser ledit client LCS externe.

3. Centre de localisation mobile de passerelle (GMLC) selon une des revendications 1 ou 2, dans lequel les moyens pour fournir la zone géographique pertinente sont agencés afin de traduire le code de pays (CC) et le code de destination de réseau (NDC) de ladite information de routage en une chaîne de texte.

4. Centre de localisation mobile de passerelle (GMLC) selon une des revendications 1 à 3, dans lequel le centre de localisation mobile de passerelle (GMLC) est un noud de réseau GSM ou UMTS.

5. Registre global (HLR,HSS) d'un réseau auquel un terminal d'utilisateur mobile est abonné, ledit terminal d'utilisateur mobile étant abonné à un réseau supportant une fonctionnalité de positionnement de service de localisation - désigné par la suite en abrégé comme LCS - et se déplaçant dans un autre réseau ne supportant pas la fonctionnalité de positionnement LCS, comprenant
• des moyens pour recevoir une demande de routage d'information provenant d'un centre de localisation mobile de passerelle (GMLC),
• des moyens pour envoyer l'information de routage demandée étant associée au réseau dans lequel ledit terminal d'utilisateur mobile se déplace audit centre de localisation mobile de passerelle (GMLC),
• ladite information de routage envoyée audit centre de localisation mobile de passerelle (GMLC) incluant une information supplémentaire de ce que ledit abonné accorde l'autorisation de fournir à une tierce partie la localisation du terminal mobile en cas de déplacement dans un autre réseau ne supportant pas la fonctionnalité de positionnement LCS, en permettant audit centre de localisation mobile de passerelle (GMLC) de déterminer ainsi sur la base de ladite information de routage la zone géographique pertinente en ce qui concerne la localisation du terminal d'utilisateur mobile.

6. Registre global (HLR,HSS) selon la revendication 5, comprenant des moyens adaptés pour fournir à l'abonné un accès à ladite autre information d'activation ou de désactivation.

7. Registre global (HLR,HSS) selon la revendication 5 ou 6, dans lequel le registre global (HLR,HSS) est un noeud de réseau GSM ou UMTS.

8. Procédé pour un centre de localisation mobile de passerelle (GMLC) comprenant les étapes consistant à :
• recevoir (1) une demande d'information concernant la localisation d'un terminal d'utilisateur mobile provenant d'un client de services de localisation externe - désigné par la suite en abrégé comme client LCS, ledit terminal d'utilisateur mobile étant abonné à un réseau supportant une fonctionnalité de positionnement LCS et se déplaçant dans un autre réseau ne supportant pas la fonctionnalité de positionnement LCS,
• demander (2) une information de routage à un registre global (HLR,HSS) du réseau auquel ledit terminal d'utilisateur mobile est abonné,
• recevoir (3) l'information de routage demandée étant associée au réseau dans lequel ledit terminal d'utilisateur mobile se déplace en provenance dudit registre global (HLR,HSS),
• envoyer (4) une demande d'information concernant la position du terminal d'utilisateur mobile selon l'information de routage reçue à un centre de commutation pour les services mobiles (MSC) ou un registre de localisation visiteur (VLR) ou un noeud de support GPRS de desserte (SGSN),
**caractérisé par** les étapes consistant à
• recevoir (5) une information de rejet provenant dudit centre de commutation pour les services mobiles (MSC) ou dudit registre de localisation visiteur (VLR) ou dudit noeud de support GPRS de desserte (SGSN) indiquant que le réseau ne supporte pas la fonctionnalité de positionnement LCS en réponse à la demande d'information concernant la localisation du terminal d'utilisateur mobile, et
• déterminer (6) sur la base de ladite information de routage reçue la zone géographique pertinente en ce qui concerne la localisation du terminal d'utilisateur mobile, et
• fournir (7) ladite zone géographique pertinente au client LCS externe,
• Ladite information de routage reçue en provenance dudit registre global (HLR,HSS) incluant une information supplémentaire de ce que l'abonné accorde l'autorisation de fournir à une tierce partie la localisation du terminal d'utilisateur mobile en cas de déplacement dans un autre réseau ne supportant pas la fonctionnalité de positionnement LCS ; et
• dans lequel la zone géographique pertinente est fournie au client LCS externe seulement si ladite information indique que l'abonné accorde l'autorisation de fournir à une tierce partie la localisation du terminal d'utilisateur mobile en cas de déplacement dans un autre réseau ne supportant pas la fonctionnalité de positionnement LCS.

9. Procédé pour un centre de localisation mobile de passerelle (GMLC) selon la revendication 8, comprenant en outre l'étape d'authentification et d'autorisation dudit client LCS externe.

10. Procédé pour un centre de localisation mobile de passerelle (GMLC) selon une des revendications 8 ou 9, dans lequel la fourniture d'une zone géographique pertinente comprend la traduction du code de pays (CC) et du code de destination de réseau (NDC) de ladite information de routage en une chaîne de texte.

11. Procédé pour un centre de localisation mobile de passerelle (GMLC) selon une des revendications 8 à 10, moyennant quoi le procédé est utilisé dans un réseau GSM ou UMTS.

12. Procédé pour un registre global (HLR,HSS) d'un réseau auquel un terminal d'utilisateur mobile est abonné, ledit terminal d'utilisateur mobile étant abonné à un réseau supportant une fonctionnalité de positionnement de service de localisation - désignée par la suite en abrégé comme LCS - et se déplaçant dans un autre réseau ne supportant pas la fonctionnalité de positionnement LCS, comprenant les étapes consistant à
• recevoir (2) une demande d'information de routage provenant d'un centre de localisation mobile de passerelle (GMLC),
• envoyer (3) l'information de routage demandée étant associée au réseau dans lequel ledit terminal d'utilisateur mobile se déplace audit centre de localisation mobile de passerelle (GMLC),
• ladite information de routage envoyée audit centre de localisation mobile de passerelle (GMLC) incluant une information supplémentaire de ce que ledit abonné accorde l'autorisation de fournir à une tierce partie la localisation du terminal mobile en cas de déplacement dans un autre réseau ne supportant pas la fonctionnalité de positionnement LCS, en permettant audit centre de localisation mobile de passerelle (GMLC) de déterminer (6) ainsi sur la base de ladite information de routage la zone géographique pertinente en ce qui concerne la localisation du terminal d'utilisateur mobile.

13. Procédé pour un registre global (HLR,HSS) selon la revendication 12, comprenant en outre l'étape consistant à fournir à un abonné un accès à ladite information supplémentaire d'activation ou de désactivation.

14. Procédé pour un registre global (HLR,HSS) selon la revendication 12 ou 13, moyennant quoi le procédé est utilisé dans un réseau GSM ou UMTS.

15. Programme informatique chargeable sur une mémoire adapté afin d'exécuter les étapes d'un des procédés selon les revendications 8 à 14.
